# EUROPEAN PATENT APPLICATION

(11) **EP 4 818 365 A1**
(43) Date of publication of application: **07.10.2026**
(21) Application number: 25167691.2
(22) Date of filing: 01.04.2025
(51) Int. Cl.: C25B 1/04, C25B 9/70, C25B 15/02

(54) **METHOD FOR OPERATING AN ELECTROLYSIS PLANT AND CORRESPONDING ELECTROLYSIS PLANT**

(71) Applicant: Linde GmbH, 82049 Pullach (DE)
(72) Inventor: Kiesel, Michael, 82049 Pullach (DE); Klein, Florian, 82049 Pullach (DE); Göke, Volker, 82049 Pullach (DE); Slaby, Oliver, 82049* Pullach (DE); Ulmer, Christoph Sebastian, 82049 Pullach (DE)
(74) Representative: Lu, Jing

(57) **Abstract**

The invention relates to a method for operating an electrolysis plant (200) for producing hydrogen from water, wherein the electrolysis plant comprises electrolysis cells, the method comprising: Providing current operating parameter values (260) of plant operating parameters; Providing performance information (280), wherein the performance information comprises information about a performance of at least one component of the electrolysis plant; Determining, based on the performance information (280), a remaining service life (282) of the at least one component of the electrolysis plant; Determining operating setpoints (262) for the stack assemblies, based on: the current operating parameter values (260), the remaining service life of the at least one component of the electrolysis plant, and operating limits (284) of the stack assemblies or parts thereof, which exceed given respective operating limits; and Providing the operating setpoints (262) for operating the electrolysis plant.

## Description

The present invention relates to a method for operating an electrolysis plant for producing hydrogen from water, wherein the electrolysis plant comprises multiple electrolysis cells and stacks; the invention also relates to a data processing system and to a corresponding electrolysis plant.

### Background

To produce hydrogen, a process known as electrolysis can be used, in which water is split or converted into oxygen and hydrogen by electrical energy. This is also referred to as water electrolysis. One example of this is the so-called proton exchange membrane electrolysis (PEM electrolysis, "proton exchange membrane" electrolysis). In this context, the terms PEM electrolysis plants or PEM electrolysers are also used. Typically, such an electrolysis plant has one or more so-called PEM stacks multiple of which can be referred to as a "stack assembly"; a PEM stack in turn has several electrolysis cells, each with a proton exchange membrane. In addition, there are also other types, like the so-called anion exchange membrane electrolysis (AEM electrolysis, anion exchange membrane" electrolysis), alkaline water electrolysis (AWE) or general alkaline electrolysis (AEL, Solid Oxide Electrolysis (SOEC), Anion Exchange Membrane Electrolysis (AEM).

Algorithms can be used for real-time optimized operation of all such electrolysis plants. Such algorithms can take into account parameters such as the current spot electricity price and the hydrogen production demand of the entire plant. Efficiency of such electrolysis plants and/or costs for operating electrolysis plants, however, often is not as good as desired. An object of the present invention is therefore to provide a way to make the operation of an electrolysis plant more efficient and/or cheaper.

### Disclosure of the invention

This object is achieved by providing a method, in particular a computer-implemented method, for operating an electrolysis plant, a data processing system and a corresponding process electrolysis plant with the features of the independent claims. Embodiments of the invention are the subject of the dependent claims and of the description that follows.

The invention relates to operating an electrolysis plant and such an electrolysis plant. The method and the plant will be described together in the following. The electrolysis plant comprises multiple stacks, wherein each stack comprises multiple electrolysis cells. The stacks, in turn, can be arranged in stack assemblies, such that the electrolysis plant comprises multiple stack assemblies, wherein each stack assembly comprises multiple stacks. As mentioned earlier, such electrolysis plant is in particular configured to produce hydrogen, by means of a process known as electrolysis, in which water is split or converted into oxygen and hydrogen by electrical energy. It is noted that, besides the electrolysis cells there are further components used in an electrolysis plant, e.g. power converters, rectifiers and the like to provide electrical energy to the electrolysis cells or stacks.

The electrolysis plant is in particular an industrial electrolysis plant, i.e. an electrolysis plant of a certain size for, e.g., producing a large amount of a hydrogen. In embodiments, the electrolysis plant is configured for splitting water by means of proton exchange membrane (PEM) electrolysis, anion exchange membrane (AEM), alkaline water electrolysis (AWE) general alkaline electrolysis (AEL) or Solid Oxide Electrolysis (SOEC) electrolysis or also Anion Exchange Membrane Electrolysis (AEM). Industrial electrolysis plants can be constructed from multiple stacks, which can be combined into several stack assemblies and operated in series with the same voltage.

Operating the electrolysis plant comprises providing current operating parameter values of plant operating parameters and providing performance information. In addition, current external values of external parameters can be provided. Operating parameters are, in particular, internal parameters of the plant like currents, pressures and temperatures (in particular of membranes or cells or stacks). Values of these operating parameters (the operating parameter values) can be obtained via measurement and/or estimation. Values of currents, for example, can be measured. Temperatures can also be measured. However, temperatures can also be estimated, e.g., based on temperatures or other parameters measured elsewhere. This can hold true for the temperature of a membrane of an electrolysis cell, for example. In an embodiment, the plant operating parameters include a temperature of the stacks, i.e. a temperature of each of the stacks of the plant or of at least one of the stacks.

The performance information comprises information about a performance of at least one component of the electrolysis plant. The at least component can comprise at least one of the following components: at least one individual electrolysis cell of the electrolysis plant, at least one group of electrolysis cells of the electrolysis plant, at least one stack of the electrolysis plant.

The at least component can also comprise one electrolysis plant out of a fleet (multiple) of electrolysis plants. Such fleet can comprise multiple plants of the same or also a combination of different types of electrolysis plants as mentioned above. Different plants, be it of the same or a different type, can be from different plant manufacturers. In this case, different optimum operating setpoints might have to be considered. The one electrolysis plant (which corresponds to the at least one component) can be the plant which is currently operated or another one.

The performance can correspond to an efficiency of the component. Typically, the efficiency continuously lowers over time, what is due to degradation of the cell components. In embodiment, the performance information is provided as continuously (or frequently or regularly, e.g. once a day or once a week) updated performance information. This might include providing a current efficiency and a forecast for future efficiency. This, in turn, can be based on a current degradation status of the components and a future course of the degradation status.

The external parameters are parameters that cannot be measured from the plant itself but can influence the operation. In an embodiment, the external parameters include a demand amount of hydrogen to be produced by the electrolysis plant. If, for example, a lower amount is required, the plant can be operated with lower energy or at lower costs. Other external parameters can be spot market prices, fees for the electrical grid (from which the electrical power is supplied to the electrolysis plant), whether forecast (e.g., low sun hours or low wind might result in low electrical energy available, and vice versa).

Based on the performance information, a remaining service life of the at least one component of the electrolysis plant is determined. This can comprise determining a remaining service life for one or all stack assemblies or stacks of the plant. In this regard, it is noted that a remaining service life is typically determined based on the fact that a component will be replaced once efficiency falls below a certain minimum efficiency, or if there are indications that the required product quality is not met anymore or that process and plant safety cannot be assured.

Further, operating setpoints for the stack assemblies are determined, based on: the current operating parameter values, the remaining service life of the at least one component of the electrolysis plant, and operating limits of the stack assemblies or parts thereof, which exceed given respective operating limits. If provided, this can also be based on the current external values. The operating setpoints are provided for operating the electrolysis plant. For example, the respective setpoints can be caused to be set in the electrolysis plant. In an embodiment, the operating setpoints for the stack assemblies are determined such that the remaining service life of at least one component of the electrolysis plant is adjusted, in particular shortened, in order to meet an exchange or maintenance date of at least one other component of the electrolysis plant. In other words, the remaining service life can be shortened on purpose, in order to maximize overall efficiency and/or costs. This includes exceeding given operating limits of the stack assemblies or parts thereof.

In general, algorithms can be used for real-time optimized operation of an electrolysis plant. Such algorithms take into account, in particular, parameters such as the current spot electricity price and the hydrogen production demand of the entire plant. For optimized operation of the plant, the optimal operating points of all stack assemblies can be calculated in real time to keep the operating costs for the targeted amount of hydrogen produced as low as possible. Such optimal operating points are then the operating setpoints.

This optimization problem can be solved by strictly adhering to (manufacturer) stack limit values (in general, given operating limits of the stack assemblies) in order to ensure the safety of the plant and, in particular, the longevity of the material. A crucial parameter in this context is, in particular, the temperature of the electrolysis stacks. A high temperature improves the efficiency of the electrolysis due to the higher activation energy in the electrochemical reaction. This means that less energy has to be added to the system by electrical voltage and thus less active electrical power is consumed, which can lead to lower operating costs. However, the temperature must not be too high, as this damages the longevity of the stack material. In particular, the membrane of PEM (or AEM) electrolysis is affected by high temperatures. This is similarly true for AEL where a diaphragm is damaged. Also, AEL allows modification of the lye concentration, with higher lye concentration being more corrosive but also more active.

Another crucial parameter in this context is, in particular, the pressure of the stack. An increased pressure - within design limits - typically accelerates unwanted side reactions and hence increases degradation. On the other hand, a high stack pressure may decrease downstream compression efforts for hydrogen and/or oxygen. Hence to save energy consumption by balance of plant equipment, higher stack operational pressure might be favoured even then sacrificing in stack lifetime.

Electrolysis as a key technology for the energy transition from fossil fuels to a CO2-neutral industry faces various challenges that negatively influence the economic efficiency of an electrolysis plant with regard to OPEX (operating expenses) and CAPEX (capital expenditure) decisions.

It has turned out that the problem of not maximizing the electrical yield or efficiency in hydrogen production arises due to the strict adherence to the (manufacturer's) temperature limits of an electrolysis cell (or other given operating limits). This weakening of the efficiency poses a problem for the efficiency of the electrolysis plant, also in the area of OPEX. The method suggested herein, however, allows to maximize the maximum efficiency of an electrolysis cell even beyond the (manufacturer's) temperature or other operating limits, in particular, if this represents a cost advantage when weighed against the material lifetime that is lost as a result.

Further, there has shown to be a further problem in that the technological maturity of electrolysis plants on an industrial scale has not yet been satisfactorily achieved. For example, the electrical yield of electrolysis cells varies greatly from unit to unit depending on their manufacture and degradation during operation. This results in the problem that these differences have to be compensated for during plant operation, otherwise stacks, stack assemblies or even larger process units would have to be replaced together when the end-of-life criterion (e.g. upper limit of gas cross-over reached, safety aspect) of only one stack is reached. In this case, other stacks or assemblies or process units still have very high efficiencies but must be replaced at the same time. The method suggested herein allows to specifically control the degradation of an electrolysis cell to enable a maximally favourable interval for replacement and maintenance of plant components.

Further, due to the insufficient maturity of the technology on an industrial scale, a considerable technical advance in the quality and/or electrical yield of plant components, particularly the stacks, is to be expected. Waiting for better manufacturing quality in the future delays investment decisions today and thus slows down a key technology for the energy transition. The method suggested herein allows the (earlier) replacement or upgrade of plant components during the operation of the electrolysis plant.

The method suggested herein adds additional steps in operating an electrolysis plant, compared to previous technologies. In particular, a (theoretical) remaining service life for the individual stack modules is determined or calculated. Considering regularly (e.g., once a day, once a week or the like) updated performance information at the individual cell, cell group or stack level and investment costs for stack replacement, this replacement of individual stacks can be optimized, planned and determined. The new remaining service life of these selected individual stacks forms the basis for subjecting these stacks to higher thermal loads (without already exceeding the safety limits, e.g. gas cross-over) and thus increasing stack efficiency and reducing specific hydrogen production costs, i.e. the stacks are deliberately driven into mechanical damage or reduced chemical activity of involved electrochemical catalysts, taking into account the newly defined remaining service life.

Determining the operating setpoints for the stack assemblies is particularly also based on a forecast for future performance or degradation of the at least one component. Degradation can be different for individual stacks. Such future performance or degradation of the at least one component depends on historical data or operation. In other words, the future behaviour (degradation), e.g., near and mid-term behaviour, is determined, based on suggested or potential new setpoints. This is particularly based on historic plant and component data. In this way, the suggested or potential new setpoints can be chosen such that the future behaviour meets the remaining service life. If this is the case, these suggested or potential new setpoints can be used as the new operating setpoints.

This allows not only continuously indicating the real degradation of each stack, but also providing a prognosis of the future degradation process. This has turned out as the only way to realistically plan intervals for replacing plant components from a CAPEX perspective. Also, from an OPEX perspective, it is allowed to exceed temperature, pressure or other operating limits to maximize the electrical yield if the benefit determined from a CAPEX perspective exceeds the additional costs incurred. This is a highly relevant factor, especially after the mechanical (manufacturer's) warranties have expired.

It has turned out that, contra usual ways, deliberately causing a faster wear of plant components leads to benefits, in particular, with an introduction of a replacement or upgrade scheduler. Also, contra common practice, control software is now allowed to break (manufacturer) limit values for the operation of plant components (e.g., excessive membrane temperature).

The targeted control of replacement or maintenance intervals in a temporal dimension in order to be able to make optimal use of a plant shutdown (plant availability) has shown to be a big technical advantage. A further advantage is the targeted replacement of individual stacks or assemblies in order to be able to replace technically related plant modules together in an economically sensible way.

Apart from that, there are also economic advantage. There is lower OPEX with the same hydrogen production due to increased efficiency resulting from the increased membrane temperature at the stack. Further, there is lower OPEX through the earliest possible replacement of stacks when stacks with an improved electrical yield become available on the market. Further, there is minimal additional CAPEX and cost of maintenance and service through minimal numbers of replacement or repair intervals, as a long-term, optimized planning of the replacement of as many components as possible is at the same time.

A data processing system according to the invention, e.g., a computer, an electrolysis plant control unit or other computing or control system, is configured, to perform the steps of a method according to the invention.

There is also provided a corresponding electrolysis plant comprising multiple stack assemblies, wherein each stack assembly comprises multiple stacks, wherein each stack comprises multiple electrolysis cells. The process plant further comprises a data processing system as mentioned above.

For further embodiments and advantages of the electrolysis plant it is referred to the description of the method and respective embodiments, which applies accordingly. In particular, the electrolysis plant implements the method according to any one of the mentioned embodiments. This may require the electrolysis plant comprising one or more additional components and/or specified components mentioned in the respective embodiment.

The implementation of a method according to the invention in the form of a computer program or computer program product with program code for performing all method steps is also advantageous, since this causes particularly low costs, especially if an executing control unit is still used for further tasks and/or is therefore present anyway. Finally, a machine-readable storage medium is provided with a computer program stored thereon as described above. Suitable storage media or data carriers for providing the computer program are, in particular, magnetic, optical and electrical memories, such as hard disks, flash memories, EEPROMs, DVDs and the like. It is also possible to download a program via computer networks (Internet, intranet, etc.). Such a download can take place wired or wirelessly (e.g. via a WLAN network, a 3G, 4G, 5G or 6G connection, etc.).

Further advantages and embodiments of the invention will be apparent from the description and the accompanying drawing. The invention is illustrated schematically by means of embodiments in the drawing and is described below with reference to the drawing.

Short description of the figures
- Fig. 1: illustrates an electrolysis plant for explaining the invention in an embodiment; and
- Fig. 2: illustrates a flow diagram for explaining the invention in an embodiment.

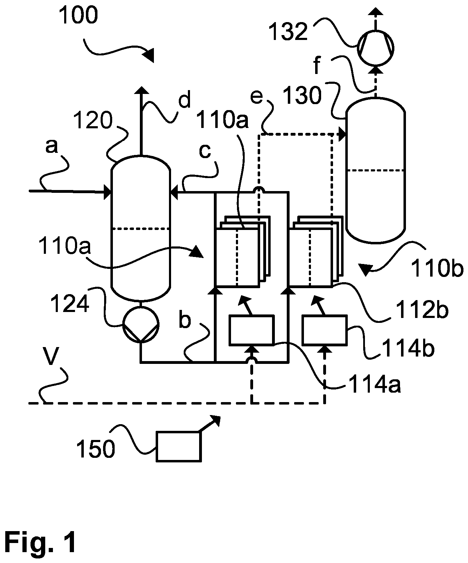

Fig. 1 schematically illustrates an exemplary electrolysis plant 100 for explaining the invention in an embodiment, and in which a method according to the invention can also be carried out. The electrolysis plant 100 is shown as an industrial electrolysis plant, in particular for water electrolysis by means of PEM (Proton Exchange Membrane). As mentioned above, the present invention can be used for different kinds of electrolysis plants, e.g. PEM, AEM, AWE, AEL or SOEC electrolysis; thus, the shown electrolysis plant is only for illustration purposes.

The electrolysis plant 100 is an electrolysis plant on an industrial scale, for example to produce hydrogen on an industrial scale. A typical power of such an electrolysis plant is, for example, more than 10 MW or even more than 100 MW.

The electrolysis plant 100 comprises, by means of example, two stack assemblies 110a, 110b. Each of the stack assemblies 110a, 110b comprises, also by means of example, three stacks 112a, 112b. Each of such stack can have multiple electrolysis cells, in each of which a proton exchange membrane (PEM) is provided. The PEM separates the electrolysis cells into an oxygen side and a hydrogen side. Depending on the size of the process plant, many more stacks per stack assembly or more stack assemblies can be provided.

The electrolysis plant 100 also comprises a container 120 that serves as an oxygen separator or oxygen-water separator. The oxygen separator 120 is connected to the stack assemblies 110a, 110b or each of the stacks or even each of the electrolysis cells via a fluid connection. This allows a fluid flow b to be pumped from the oxygen separator 120 to the stacks, e.g. by means of a pump 124, via e.g. pipes.

The stack assemblies and/or stacks and/or electrolysis cells are also connected to the oxygen separator 120 via a further fluid connection, e.g. pipes. A fluid stream c can be pumped through this fluid connection from the electrolysis cells, there from the oxygen side, to the oxygen separator 120; the pump 124 may also be sufficient for this.

In addition, the electrolysis plant 100 comprises a further container 130, which serves as a hydrogen separator or hydrogen-water separator. The stack assemblies, stacks or the electrolysis cells are connected to the hydrogen separator 130 via a fluid connection, e.g. pipes. A fluid flow e from the electrolysis cells, there from the hydrogen side, can be conducted through the fluid connection to the hydrogen separator 130.

When the electrolysis plant 100 is in operation, the fluid stream b, which contains water, is pumped from the oxygen separator 120 to the stacks. There, the water is converted into oxygen and hydrogen. To do this, an electrical voltage is applied to the electrolysis cells, the hydrogen is transported electrochemically through the PEM to the hydrogen side and can be supplied from there, possibly still mixed with water vapor and a liquid water phase, as a stream e - a hydrogen-containing fluid stream - to the hydrogen separator 130. The hydrogen can be separated there and removed as stream f, e.g. for further use or storage. A compressor 132 can be used to compress the hydrogen of stream f for storage, for example.

The oxygen remains on the oxygen side together with most of the water. The resulting fluid stream c therefore contains water and oxygen - it is an oxygen-containing fluid stream. As mentioned, fluid stream c is fed to the oxygen separator 120. Since water is converted into oxygen and hydrogen in the electrolytic cells and the oxygen and hydrogen are removed, the amount of water decreases and, in order to maintain continuous operation, new water (so-called make-up water) must be supplied from an external source as stream a.

As mentioned, oxygen is separated from the water in the oxygen separator 120; the oxygen separated or discharged in this process can be discharged as an oxygen stream d, for example for further use, and can be stored if necessary.

The products of the electrolysis plant 100, which are obtained from the electrolysis process, are thus hydrogen and oxygen as mentioned above. As also mentioned, an electrical voltage is applied to the electrolysis cells, in order to facilitate the required process. In order to provide an appropriate voltage to the electrolysis cells, power converters 112a, 112b are provided, one of them for a respective one of the stack assemblies 110a, 110b. It is noted that different designs are possible, e.g., a larger power converter for more stacks or also multiple power converters for less stacks each.

These power converters 112a, 112b are provided with electrical power from a grid, which is not shown here. The electrical power provided from the grid and received by the power converters is indicated with V.

Further, the electrolysis plant 100 comprises a data processing or computer system 150, e.g. a plant control unit or plant controller, for operating the electrolysis cells or stack assemblies - via the power converters - and for controlling the regulation of, for example, water flow rates and, possibly indirectly, temperatures. Corresponding sensors can supply measured values or measurement data for this purpose. Note that the data processing system 150 can also comprise multiple individual control units or the like.

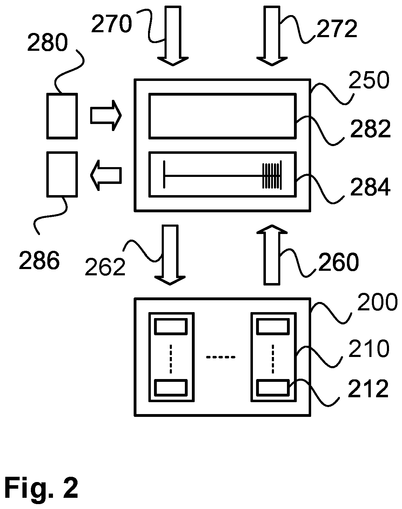

Fig. 2 illustrates, in a flow diagram, a method in an embodiment, which can be performed with the electrolysis plant of Fig. 1, for example. A data processing system 250 is shown, which can be a plant control unit, used to operate (or control) an electrolysis plant 200. The electrolysis plant 200 comprises, by means of example, multiple stack assemblies 210, each stack assembly comprising multiple stacks 212, and each stack comprising multiple cells. The electrolysis plant 200 can, for example, correspond to electrolysis plant 100 of Fig. 1.

The operation comprises providing different values or information. Such values or information can, in particular, be received from the electrolysis plant 200 or components thereof (e.g., acquired by means of sensors) or can be determined based on received or measured values, or received from elsewhere.

Current operating parameter values 260 of plant operating parameters are provided. Such plant operating parameters can comprise currents used for operating the stacks or inverters thereof, flow rates and, in particular, temperatures and pressures of the stacks. Temperatures can, for example, be measured by means of temperature sensors; temperatures of membranes can also be determined or estimated based on models and temperatures acquired by sensor located close to the membrane. Pressures can be measured by means of sensors, for example.

Current external values 270, 272 of external parameters are provided. Such external parameters can comprise parameters for operational control, with values 270, like a demand amount of hydrogen to be produces, spot market prices, grid fees, weather forecast, power purchase agreements and the like. These parameters for operational control in particular influence a short-term operation, which might change within minutes, hours or days.

Such external parameters can comprise parameters for revamp planning, with values 272, like costs per stack or stack assembly, efficiency per stack or stack assembly, delivery times of components, technician costs, technician availability and the like. These parameters for revamp planning in particular influence a long-term operation, which might change within weeks or months.

Performance information 280 is provided. The performance information comprises information about a performance of components of the electrolysis plant, in particular, of the stacks or stack assemblies, or also of individual electrolysis cells. Such performance information can comprise a current efficiency of the component and allows, for example, determining a current degradation status of the component; the performance information can also comprise such current degradation status.

Performance information of the stack can e.g. be determined by analysis of an U-I curve (voltage vs. current curve) of the stack, analysis of heat and mass balance, analysis of additional sensor data that correlates with wear of the stack (e.g. fluoride release rate, crossover, etc.) or can be predetermined and provided as information from stack manufacturer. Additional calculations (e.g. time integration) might be needed to derive a current stack status from timeseries of instantaneous degradation indicators.

Based on the performance information 280, a remaining service life 282 of the respective components is determined. Further, based on the current operating parameter values 260, the current external values 270, 272, the remaining service life 282 of the components, and based on operating limits 284 of the stack assemblies or parts thereof, operating setpoints 262 for the stack assemblies are determined and then provided for operating the electrolysis plant 200.

The operating limits 284 of the stack assemblies or parts thereof exceed given respective operating limits; this is indicated in Fig. 2 by means of dense lines at the right side inside rectangle 284. While usually, given operating limits (typically given by the manufacturer) are strictly observed, this is not the case within the present invention. This means that such given operating limits can - but do not need to be - exceeded for determining the setpoints. Exceeding the operating limits is an option that is explicitly implemented in the control, although there might be situations where these limits do not need to be exceeded for proper operation. However, if done so, this can shorten the actual remaining service life of the respective component, on purpose.

The operating setpoints can comprise voltages (or also currents) used for operating the stacks or inverters thereof, flow rates and, in particular, temperatures of the stacks.

It is noted that the values and/or information provided can be continuously or regularly updated or be real-time data. Likewise, the operating setpoints can continuously or regularly be (newly) determined and provided for operation.

In addition, a schedule 286 for exchanging components or generally revamp or just maintenance can be determined and provided. Since the remaining service life of components can particularly tailored to specific exchange or maintenance dates, this - overall - can improve efficiency and CAPEX.

## Claims

1. A method for operating an electrolysis plant (100, 200) for producing hydrogen from water, wherein the electrolysis plant comprises electrolysis cells in stacks (112a, 112b, 212), which are arranged in stack assemblies (110a, 110b, 210),
the method comprising:
Providing current operating parameter values (260) of plant operating parameters;
Providing performance information (280), wherein the performance information comprises information about a performance of at least one component of the electrolysis plant;
Determining, based on the performance information (280), a remaining service life (282) of the at least one component of the electrolysis plant;
Determining operating setpoints (262) for the stack assemblies, based on:
- the current operating parameter values (260),
- the remaining service life of the at least one component of the electrolysis plant, and
- operating limits (284) of the stack assemblies or parts thereof, which exceed given respective operating limits; and
Providing the operating setpoints (262) for operating the electrolysis plant.

2. The method of claim 1, wherein the operating setpoints (262) for the stack assemblies are determined such that the remaining service life of at least one component of the electrolysis plant is adjusted, in particular shortened, in order to meet an exchange or maintenance date of at least one other component of the electrolysis plant.

3. The method of claim 1 or 2, wherein the operating setpoints (262) for the stack assemblies are determined based on a forecast for future performance or degradation of the at least one component, wherein the future performance or degradation of the at least one component depends on historical data or operation.

4. The method of any one of the preceding claims, wherein the plant operating parameters include a temperature of the stacks, and wherein the operating limits include a temperature limit of the stacks.

5. The method of any one of the preceding claims, wherein the plant operating parameters include a pressure of the stacks, and wherein the operating limits include a pressure limit of the stacks.

6. The method of any one of the preceding claims, wherein the at least component of the electrolysis plant comprises at least one of the following components:
- at least one individual electrolysis cell of the electrolysis plant,
- at least one group of electrolysis cells of the electrolysis plant,
- at least one stack of the electrolysis plant,
- at least one electrolysis plant in a fleet of electrolysis plants.

7. The method of any one of the preceding claims, further comprising:
Providing current external values (270, 272) of external parameters; and
wherein determining the operating setpoints (262) for the stack assemblies is further based on the current external values (270, 272).

8. The method of claim 7, wherein the external parameters include a demand amount of hydrogen to be produced by the electrolysis plant.

9. The method of any one of the preceding claims, wherein the performance information is provided as regularly updated performance information.

10. The method of any one of the preceding claims, wherein the electrolysis plant is an industrial electrolysis plant configured for splitting water by means of proton exchange membrane, PEM, electrolysis or anion exchange membrane, AEM, electrolysis, alkaline water electrolysis, AWE, alkaline electrolysis, AEL, Solid Oxide Electrolysis, SOEC, or Anion Exchange Membrane Electrolysis, AEM.

11. A data processing system (150) comprising means to perform the steps of the method of any one of the preceding claims.

12. A computer program comprising instructions which, when the program is executed by a computer, cause the computer to perform the steps of the method of any one of claims 1 to 10.

13. An electrolysis plant (100), comprising electrolysis cells in stacks, which are arranged in stack assemblies, the electrolysis plant further comprising a data processing system (150) according to claim 11.

14. The electrolysis plant (100) of claim 13, being an industrial electrolysis plant configured for splitting water by means of proton exchange membrane, PEM, electrolysis or anion exchange membrane, AEM, electrolysis, alkaline water electrolysis, AWE, alkaline electrolysis, AEL, Solid Oxide Electrolysis, SOEC, or Anion Exchange Membrane Electrolysis, AEM.
